# EUROPÄISCHE PATENTANMELDUNG

(11) **EP 2 853 821 A1**
(43) Veröffentlichungstag der Anmeldung: **01.04.2015**
(21) Anmeldenummer: 14169578.3
(22) Anmeldetag: 23.05.2014
(51) Int. Cl.: F24D 13/02

(54) **Heizvorrichtung**

(30) Priorität: 25.09.2013 DE 202013104364 U
(71) Anmelder: Köhler, Bettina, 71159 Mötzingen (DE)
(72) Erfinder: Köhler, Henryk, 71159 Mötzingen (DE)
(74) Vertreter: Schmid, Wolfgang

(57) **Zusammenfassung**

Die Erfindung betrifft eine Heizvorrichtung zur Anbringung an einer Wand (2), einem Boden (3) oder einer Decke (4) eines Gebäudes (5), mit einem elektrischen Heizelement (6), welches mit einer Schicht (9) abgedeckt ist, die ein Partikel (10) aufweisendes Granulat (11) und ein die Partikel (10) des Granulats (11) miteinander verbindendes Bindemittel (12) aufweist, deren Schicht (9) luftdurchlässig ist.

## Beschreibung

Die Erfindung betrifft eine Heizvorrichtung zur Anbringung an einer Wand, einem Boden oder einer Decke eines Gebäudes.

Aus dem allgemeinen Stand der Technik sind die unterschiedlichsten Heizvorrichtungen bzw. Heizungen bekannt. Am weitesten verbreitet sind wasserdurchströmte, üblicherweise an der Wand montierte Heizkörper, bei denen das dieselben durchströmende Wasser häufig mit Öl oder Gas aufgeheizt wird. Solche Öl- oder Gasheizungen werden auch in Kombination mit Fußbodenheizungen eingesetzt, bei denen von dem erwärmten Wasser durchströmte Leitungen verwendet werden, die üblicherweise in einer Estrichschicht eingebettet sind. Alternativ zur Erwärmung des Wassers mit Öl oder Gas werden in jüngster Zeit auch Sonnenkollektoren, Wärmepumpen oder ähnliches eingesetzt.

Bei den auf der Erwärmung von Wasser mittels Öl oder Gas basierenden Heizungen besteht jedoch das Problem, dass fossile Brennstoffe knapper und damit auch teurer werden.

Des Weiteren werden bereits seit längerer Zeit elektrische Heizvorrichtungen eingesetzt, beispielsweise in Form von Fußbodenheizungen. Dabei sind von elektrischem Strom durchflossene Leitungen in einer Estrichschicht verlegt und sollen auf diese Weise den darüber liegenden Bodenbelag erwärmen.

Problematisch bei diesen elektrischen Fußbodenheizungen ist jedoch das sehr träge Ansprechen derselben, was hauptsächlich auf den Einbau der stromdurchflossenen Leitungen in die Estrichschicht sowie auf den zusätzlichen, sich über der Estrichschicht befindenden Bodenbelag zurückzuführen ist.

Ein grundsätzliches Problem der bekannten Heizvorrichtungen besteht meist darin, dass diese fest mit dem Gebäude verbunden sind und sich nur mit sehr hohem Aufwand austauschen lassen.

Es ist daher Aufgabe der vorliegenden Erfindung, eine Heizvorrichtung zu schaffen, die einfach zu installieren ist, einen guten Wirkungsgrad aufweist und schneller anspricht als bekannte Lösungen.

Erfindungsgemäß wird diese Aufgabe durch die in Anspruch 1 genannten Merkmale gelöst.

Das erfindungsgemäße elektrische Heizelement, das mittels der luftdurchlässigen Schicht abgedeckt ist, ist in der Lage, aus dem dasselbe durchfließenden elektrischen Strom Wärme zu erzeugen, die aufgrund der luftdurchlässigen Schicht sehr schnell aus derselben austreten und sich damit in dem Raum, in dem die erfindungsgemäße Heizvorrichtung eingebaut ist, verteilen kann. Dadurch ergibt sich eine sehr schnell ansprechende Heizvorrichtung, die in der Lage ist, für eine gleichmäßige Raumerwärmung zu sorgen, und die aufgrund der direkten Wärmeabgabe durch die luftdurchlässige Schicht in den jeweiligen, zu beheizenden Raum nur sehr wenig Strom verbraucht.

Durch die große Abstrahlfläche der erfindungsgemäßen Heizvorrichtung ist verhältnismäßig wenig Energie notwendig, um eine ausreichende Wärmeentwicklung zu erreichen.

Ein weiterer Vorteil der erfindungsgemäßen Heizvorrichtung ist ihre einfache und an nahezu jeder beliebigen Stelle im Raum realisierbare Montage, da durch das Granulat und Bindemittel, das die Partikel des Granulats miteinander verbindet, eine Art elastische Fliese mit flacher, plattenförmiger Ausgestaltung entsteht, die beispielsweise auf dem Boden, insbesondere jedoch an einer Wand, angebracht werden kann, da sie durch ihren Aufbau kein störendes, sondern vielmehr ein dekoratives Element darstellt.

Insbesondere kann die erfindungsgemäße Heizvorrichtung auch nachträglich an bereits bestehenden Wänden, Böden oder Decken eines Gebäudes montiert werden, so dass ein Ersatz oder eine Ergänzung bereits bestehender Heizungen möglich ist.

Eine sehr einfach zu realisierende und sehr zuverlässig arbeitende Ausführungsform des elektrischen Heizelements kann sich ergeben, wenn dasselbe als Widerstandsheizelement ausgebildet ist.

Dabei kann vorgesehen sein, dass das elektrische Heizelement wenigstens einen Heizdraht aufweist. Ein solcher Heizdraht gibt, wenn er von Strom durchflossen wird, die dabei entstehende Wärme in jeder Richtung ab, so dass die Wärme die luftdurchlässige Schicht insbesondere in Richtung des zu beheizenden Raums verlassen kann.

In einer alternativen Ausgestaltung der Erfindung kann vorgesehen sein, dass das elektrische Heizelement als Infrarotheizelement ausgebildet ist. Auch mit einem derartigen Infrarotheizelement lässt sich mit elektrischem Strom Wärme erzeugen, die dann durch die Offenporigkeit der das elektrische Heizelement abdeckenden Schicht in den jeweils zu beheizenden Raum abgegeben werden kann.

In einer weiteren, sehr vorteilhaften Ausgestaltung der Erfindung kann vorgesehen sein, dass das elektrische Heizelement an der von der Schicht abgewandten Seite mit einer Isolierfolie abgedeckt ist. Auf diese Weise wird verhindert, dass ein zu großer Anteil der erzeugten Wärme in den Boden, die Wand oder die Decke abgegeben wird, wodurch sich eine noch bessere Heizleistung und ein geringerer Energieverbrauch ergibt. In diesem Zusammenhang ist jedoch auch der in den Boden, die Wand oder die Decke gelangende Anteil der Wärme nützlich, da er, beispielsweise bei Kellerwänden, zur Trocknung der Wand dienen kann, so dass eine mit einer erfindungsgemäßen Heizvorrichtung versehene Wand weniger Restfeuchtigkeit aufweist als üblich, so dass sich deren Dämmwert verbessert.

Eine weitere vorteilhafte Ausgestaltung der Erfindung kann darin bestehen, dass die Partikel des Granulats Marmor, Quarz, Glas und/oder Kunststoff aufweisen. Diese Materialien können zusammen mit dem Bindemittel eine elastische, luftdurchlässige Schicht bilden, die in vielen Bereichen eines Gebäudes eingesetzt werden kann. Die genannten Materialien sind jedoch nicht nur in der Lage, die technischen Anforderungen zu erfüllen, sondern genügen auch optischen Erfordernissen, so dass sie problemlos als oberste Schicht in einem Raum eingesetzt werden können und keiner weiteren Oberflächenbehandlung mehr bedürfen.

Um die Luftdurchlässigkeit der erfindungsgemäßen Schicht auf einfache Weise zu erzielen, kann in einer vorteilhaften Weiterbildung der Erfindung vorgesehen sein, dass der Anteil des Bindemittels an der Schicht 5 bis 8 Gew.-% beträgt.

Als besonders gut geeignet zur Verbindung der Partikel des Granulats der luftdurchlässigen Schicht hat es sich erwiesen, wenn das Bindemittel ein Zweikomponenten-Polyurethan aufweist. Alternativ können auch andere Bindemittel, insbesondere Kunststoff-Bindemittel, verwendet werden.

Des Weiteren kann vorgesehen sein, dass das elektrische Heizelement mit einer elektrischen Leitung versehen ist. Auf diese Weise kann jede einzelne Heizvorrichtung mit der elektrischen Stromversorgung verbunden werden, so dass auch einzelne, plattenförmige Heizvorrichtungen autark installiert werden können.

Dabei kann vorgesehen sein, dass das elektrische Heizelement mit einem Transformator verbunden ist. Auf diese Weise wird die in üblichen Stromnetzen vorhandene elektrische Spannung auf die zum Betreiben des elektrischen Heizelements geeignete Spannung transformiert.

Um eine Steuerung der Heizleistung der erfindungsgemäßen Heizvorrichtung zu ermöglichen, kann des Weiteren vorgesehen sein, dass das elektrische Heizelement mit einem Thermostat verbunden ist.

Nachfolgend ist ein Ausführungsbeispiel der Erfindung anhand der Zeichnung prinzipmäßig dargestellt.

Es zeigt:
- Fig. 1: eine Draufsicht auf eine erfindungsgemäße Heizvorrichtung;
- Fig. 2: einen Schnitt durch eine erfindungsgemäße Heizvorrichtung; und
- Fig. 3: ein Beispiel einer Installation der erfindungsgemäßen Heizvorrichtung in einem Gebäude.

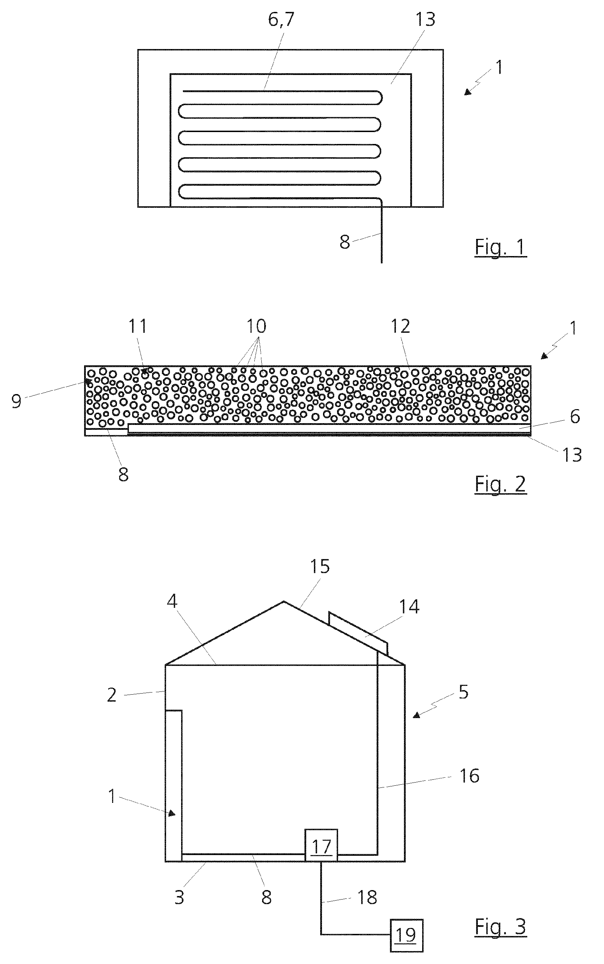

Fig. 1 zeigt eine sehr schematische Ansicht einer Heizvorrichtung 1, die zur Anbringung an einer Wand 2, einem Boden 3 oder einer Decke 4 eines in Fig. 3 dargestellten Gebäudes 5 vorgesehen ist. In dem in Fig. 3 dargestellten Ausführungsbeispiel ist die Heizvorrichtung 1 an einer Wand 2 des Gebäudes 5 angebracht.

Die Heizvorrichtung 1 weist ein elektrisches Heizelement 6 auf, das im vorliegenden Fall nur einen Teil der Fläche der Heizvorrichtung 1 einnimmt. Grundsätzlich wäre es zwar möglich, das elektrische Heizelement 6 über die gesamte Fläche der plattenförmigen Heizvorrichtung 1 vorzusehen, wenn die Größe der Heizvorrichtung 1 jedoch an bestimmte räumliche Gegebenheiten des Gebäudes 5 angepasst werden muss, kann es erforderlich sein, einen Teil der Heizvorrichtung 1 abzuschneiden, was problematisch ist, wenn die gesamte Fläche der Heizvorrichtung 1 von dem elektrischen Heizelement 6 bedeckt ist. Vorzugsweise werden die plattenförmigen Heizvorrichtungen 1 in einer bestimmten Breite und einer bestimmten Höhe hergestellt, so dass eine gewisse Serienfertigung möglich ist. Grundsätzlich ist es jedoch möglich, die Heizvorrichtung 1 im Sinne einer Vorkonfektionierung an die räumlichen Gegebenheiten des jeweiligen Gebäudes 5 anzupassen. In diesem Fall kann das elektrische Heizelement 6 auch über die gesamte Fläche der Heizvorrichtung 1 verlaufen. Bei einer solchen Vorkonfektionierung können auch Fenster und dergleichen des Gebäudes 5 berücksichtigt werden.

In dem in Fig. 1 dargestellten Ausführungsbeispiel ist das elektrische Heizelement 6 als Widerstandsheizelement ausgebildet und weist einen Heizdraht 7 auf, der im vorliegenden Fall mäanderförmig über die Fläche des elektrischen Heizelements 6 verteilt angeordnet ist. In dem Heizdraht 7 wird die elektrische Leistung in Wärme umgewandelt. Alternativ zu der Verwendung eines Widerstandsheizelements kann das elektrische Heizelement 6 auch als Infrarotheizelement ausgebildet sein.

Das elektrische Heizelement 6 ist des Weiteren mit einer elektrischen Leitung 8 versehen, die sich im vorliegenden Fall unmittelbar an den Heizdraht 7 anschließt. Mittels der elektrischen Leitung 8 kann das elektrische Heizelement 6 mit Strom versorgt werden, beispielsweise aus einer handelsüblichen Steckdose. Im vorliegenden Fall ist vorgesehen, jede einzelne Heizvorrichtung 1 mit einer elektrischen Leitung 8 zu versehen. Grundsätzlich ist es jedoch auch möglich, mehrere Heizvorrichtungen 1 miteinander zu koppeln und lediglich eine elektrische Leitung 8 an mehrere der Heizvorrichtungen 1 anzuschließen.

In dem Schnitt von Fig. 2 ist der Aufbau der Heizvorrichtung 1 noch detaillierter zu erkennen. Daraus geht hervor, dass das elektrische Heizelement 6 von einer Schicht 9 abgedeckt ist, die ein eine Vielzahl von Partikeln 10 aufweisendes Granulat 11 und ein die Partikel 10 des Granulats 11 verbindendes Bindemittel 12 aufweist. Durch diesen Aufbau ergibt sich eine Offenporigkeit bzw. Luftdurchlässigkeit der Schicht 9, was dazu führt, dass die von dem elektrischen Heizelement 6 erzeugte Wärme die Heizvorrichtung 1 mit geringem Widerstand verlassen kann. Dadurch spricht die Heizvorrichtung 1 nach ihrem Einschalten sehr schnell an und sorgt, je nach Größe derselben, für eine gleichmäßige Wärmeverteilung in dem Raum, in dem sie eingebaut ist.

Aus Fig. 2 geht des Weiteren hervor, dass das elektrische Heizelement 6 an der von der Schicht 9 abgewandten Seite mit einer Isolierfolie 13 abgedeckt ist, die dafür sorgt, dass der größte Teil der von dem elektrischen Heizelement 6 erzeugten Wärme durch die Schicht 9 in den zu beheizenden Raum strömt. Die Isolierfolie 13, die insbesondere aus Silber besteht bzw. Silber aufweist, trägt außerdem zur Elastizität der Heizvorrichtung 1 bei.

Die Partikel 10 des Granulats 11 weisen vorzugsweise Marmor, Quarz, Glas und/oder Kunststoff auf und sind durch das Bindemittel 12 elastisch miteinander verbunden. Die einzelnen Partikel 10 des Granulats 11 sind dabei so angeordnet, dass stets gewisse Freiräume zwischen denselben verbleiben, wodurch sich die Offenporigkeit des Granulats 11 ergibt. Da das Bindemittel 12 nur dazu dient, die einzelnen Partikel 10 des Granulats 11 miteinander zu verbinden, werden diese offenen Poren durch das Bindemittel 12 nicht vollständig geschlossen. Bei der Herstellung der Schicht 9 aus dem Granulat 11 und dem Bindemittel 12 läuft überschüssiges Bindemittel 12 aus einer nicht dargestellten Form nach unten ab, so dass sich an der Oberseite, also an der dem Raum, in dem die Heizvorrichtung 1 eingebaut werden soll, zugewandten Seite keine geschlossene Fläche ergibt. Die gesamte Heizvorrichtung 1 kann somit in beliebiger Form ausgeführt werden, wodurch, wie oben erwähnt, eine Vorkonfektionierung und Anpassung derselben an bestimmte räumliche Gegebenheiten möglich ist. Das Bindemittel 12, das vorzugsweise ein Zweikomponenten-Polyurethan aufweist bzw. als Zweikomponenten-Polyurethan-Bindemittel ausgeführt ist, ist in einem Anteil von 5 bis 8 Gew.-%, insbesondere in einem Anteil von 6 bis 7 Gew.-%, in der Schicht 9 enthalten. Dadurch wird die oben beschriebene Offenporigkeit bzw. Luftdurchlässigkeit der Schicht 9 sowie deren Elastizität begünstigt.

Bei der Herstellung wird das Granulat 11 in eine Form, in der sich bereits das elektrische Heizelement 6 und gegebenenfalls die Isolierfolie 13 befinden, geschüttet und anschließend wird das Bindemittel 12 in die Form eingebracht. Die Verbindung zwischen dem elektrischen Heizelement 6 und dem Granulat 11 wird dadurch ebenfalls durch das Bindemittel 12 erreicht.

In Fig. 3 ist ein Installationsbeispiel der Heizvorrichtung 1 schematisch dargestellt. Dabei ist die Heizvorrichtung 1, wie bereits oben erwähnt, an einer der Wände 2 des Gebäudes 5 angebracht. Diese Anbringung der plattenförmigen Heizvorrichtung 1 an der Wand 2 kann beispielsweise mit handelsüblichem Fliesenkleber durchgeführt werden. Die Versorgung der Heizvorrichtung 1 mit elektrischem Strom erfolgt in diesem Fall durch eine Photovoltaikanlage 14, die sich auf einem Dach 15 des Gebäudes 5 befindet. Von der Photovoltaikanlage 14 verläuft eine elektrische Verbindungsleitung 16 zu einer Steuereinrichtung 17, an der die elektrische Leitung 8 der Heizvorrichtung 1 angeschlossen ist. Die Steuereinrichtung 17 ist dabei so ausgeführt, dass sie der Heizvorrichtung 1 jeweils die gewünschte Menge an Strom zuführt. In nicht dargestellter Weise kann die Steuereinrichtung 17 einen Transformator zum Transformieren der von der Photovoltaikanlage 14 erzeugten Spannung auf eine von der Heizvorrichtung 1 verwendbare Spannung sowie einen Thermostat zum Steuern bzw. Regeln der von der Heizvorrichtung 1 abgegebenen Wärme umfassen. Die Steuereinrichtung 17 ist im vorliegenden Fall über eine weitere elektrische Verbindungsleitung 18 mit einem sehr schematisch dargestellten Hausstromnetz 19 verbunden. Auf diese Weise kann die Heizvorrichtung 1 auch unabhängig von der Photovoltaikanlage 14 betrieben werden. Selbstverständlich ist auch ein Verzicht auf die Photovoltaikanlage 14 möglich, wenn die Heizvorrichtung 1 lediglich aus dem Hausstromnetz 19 versorgt wird.

Grundsätzlich kann auch eine einzige Heizvorrichtung 1 an einer handelsüblichen Steckdose autark betrieben werden. Lediglich ein Transformator ist dabei zwischen der Heizvorrichtung 1 und der Steckdose vorzusehen. Ein solcher autarker Betrieb ist beispielsweise in Skikellern von Hotels vorstellbar.

## Patentansprüche

1. Heizvorrichtung zur Anbringung an einer Wand (2), einem Boden (3) oder einer Decke (4) eines Gebäudes (5), mit einem elektrischen Heizelement (6), welches mit einer Schicht (9) abgedeckt ist, die ein Partikel (10) aufweisendes Granulat (11) und ein die Partikel (10) des Granulats (11) miteinander verbindendes Bindemittel (12) aufweist, wobei die Schicht (9) luftdurchlässig ist.

2. Heizvorrichtung nach Anspruch 1,
**dadurch gekennzeichnet, dass** das elektrische Heizelement (6) als Widerstandsheizelement ausgebildet ist.

3. Heizvorrichtung nach Anspruch 2,
**dadurch gekennzeichnet, dass** das elektrische Heizelement (6) wenigstens einen Heizdraht (7) aufweist.

4. Heizvorrichtung nach Anspruch 1,
**dadurch gekennzeichnet, dass** das elektrische Heizelement (6) als Infrarotheizelement ausgebildet ist.

5. Heizvorrichtung nach einem der Ansprüche 1 bis 4,
**dadurch gekennzeichnet, dass** das elektrische Heizelement (6) an der von der Schicht (9) abgewandten Seite mit einer Isolierfolie (13) abgedeckt ist.

6. Heizvorrichtung nach einem der Ansprüche 1 bis 5,
**dadurch gekennzeichnet, dass** die Partikel (10) des Granulats (11) Marmor, Quarz, Glas und/oder Kunststoff aufweisen.

7. Heizvorrichtung nach einem der Ansprüche 1 bis 6,
**dadurch gekennzeichnet, dass** der Anteil des Bindemittels (12) an der Schicht (9) 5 bis 8 Gew.-% beträgt.

8. Heizvorrichtung nach einem der Ansprüche 1 bis 7,
**dadurch gekennzeichnet, dass** das Bindemittel (12) ein Zweikomponenten-Polyurethan aufweist.

9. Heizvorrichtung nach einem der Ansprüche 1 bis 8,
**dadurch gekennzeichnet, dass** das elektrische Heizelement (6) mit einer elektrischen Leitung (8) versehen ist.

10. Heizvorrichtung nach Anspruch 9,
**dadurch gekennzeichnet, dass** das elektrische Heizelement (6) mit einem Transformator verbunden ist.

11. Heizvorrichtung nach einem der Ansprüche 1 bis 10,
**dadurch gekennzeichnet, dass** das elektrische Heizelement (6) mit einem Thermostat verbunden ist.
